Europäisches Patentamt

(19) European Patent Office

Office européen des brevets

(11) Veröffentlichungsnummer: **0 357 551 B1**

(12) # EUROPÄISCHE PATENTSCHRIFT

(45) Veröffentlichungstag der Patentschrift:
09.10.91 Patentblatt 91/41

(51) Int. Cl.$^5$: **F16L 55/02, F16L 47/00**

(21) Anmeldenummer: **89810615.8**

(22) Anmeldetag: **18.08.89**

(54) **Formstück aus Kunststoff für Rohrsysteme.**

(30) Priorität: **29.08.88 CH 3196/88**

(43) Veröffentlichungstag der Anmeldung:
**07.03.90 Patentblatt 90/10**

(45) Bekanntmachung des Hinweises auf die
Patenterteilung:
**09.10.91 Patentblatt 91/41**

(84) Benannte Vertragsstaaten:
**AT BE CH DE FR GB IT LI NL**

(56) Entgegenhaltungen:
**EP-A- 0 095 582**

(73) Patentinhaber: **Geberit AG**
**Schachenstrasse 77**
**CH-8645 Jona (CH)**

(72) Erfinder: **Jöhri, Haimo**
**Hummelbergstrasse 66**
**CH-8645 Jona (CH)**

(74) Vertreter: **Groner, Manfred et al**
**Patentanwalts-Bureau Isler AG Postfach 6940**
**CH-8023 Zürich (CH)**

## Beschreibung

Die Erfindung betrifft ein Formstück nach dem Oberbegriff des unabhängigen Patentanspruchs 1.

Um die Schalldämmung von aus Kunststoffrohrteilen zusammengesetzten Abflussrohrsystemen zu verbessern wird in der DE-OS 2714576 vorgeschlagen, die Rohrteile auf der Aussenseite mit einer Schalldämmschicht aus einem offenporigen, weichen Schaumkunststoff, der einen anorganischen Füllstoff aufweist, zu versehen. Als Schaumkunststoff wird Weichpolyurethanschaum und als Füllstoff Kalziumcarbonat oder Schwerspat vorgeschlagen. Bei einem Rohrsystem aus solchen Rohrteilen besteht die Schwierigkeit, dass Reperaturen schwierig sind und insbesondere das bei Reparaturen oft angewendete Stumpfschweissen kaum möglich ist. An der Aussenseite der Muffenenden ist jeweils ein rundumlaufender Bund vorhanden und die Dicke der Schalldämmschicht ist im wesentlichen gleich dem Aussendurchmesser der auf den Muffenenden aussen rundumlaufenden Bunde. Zur Erreichung der geforderten Schalldämmung ist eine Isolationsdicke von 10 mm notwendig, was einen hohen Materialverbrauch und einen entsprechend hohen Einsatz von Treibgasen sowie eine hohe Raumbeanspruchung bedingt.

Im Stand der Technik sind auch Matten bekannt, die um die Rohre und Formteile gelegt werden und die aus einer inneren Schaumstoffschicht, einer Bleifolie und einer äusseren PVC-Folie bestehen. Diese Matte wirkt luftschall- und körperschalldämmend. Sie ist aber auch verhältnismässig dick und benötigt bei Montage und Reparatur einen hohen Aufwand.

Der Erfindung liegt die Aufgabe zugrunde, Formstücke für ein Abflussrohrsystem zu schaffen,
— die mit Schweissmuffen verbunden werden können,
— die eine einfachere Reparatur und insbesondere ein Stumpfschweissen ermöglichen,
— zur Herstellung weniger Material benötigen und dieses Material umweltverträglich ist,
— und die dennoch bei einfacher Herstellung den üblichen Anforderungen an die Luftschall- und Körperschalldämmwirkungen gerecht werden.

Die Aufgabe wird durch die Erfindung gemäss Anspruch 1 gelöst. Das Formstück kann auch im Bereich der schalldämmenden Schicht durchgetrennt und mittels Stumpfschweissung verbunden werden. Mit einer Dicke der Isolationsschicht von lediglich 5 mm wird eine Schalldämmung erreicht, die derjenigen mehrschichtiger Matten entspricht. Speziell ausgebildete Muffenenden mit Dichtungsringen und einem an die Dicke der Isolationsschicht angepasstem Bund sind nicht erforderlich, vielmehr können die Formstücke in einfacher Weise mittels Schweissmuffen mit geraden Rohrteilen verbunden werden. Eine Splittergefahr der Isolationsschicht besteht bei den erfindungsgemässen Formstücken, im Gegensatz zu denjenigen mit einer Schicht aus Schaumkunststoff, nicht. Der anorganische Füllstoff kann Schwerspat (Baryt) sein. Treibgase und Blei werden zur Herstellung nicht benötigt.

Vorteilhafte Weiterbildungen ergeben sich aus den abhängigen Ansprüchen.

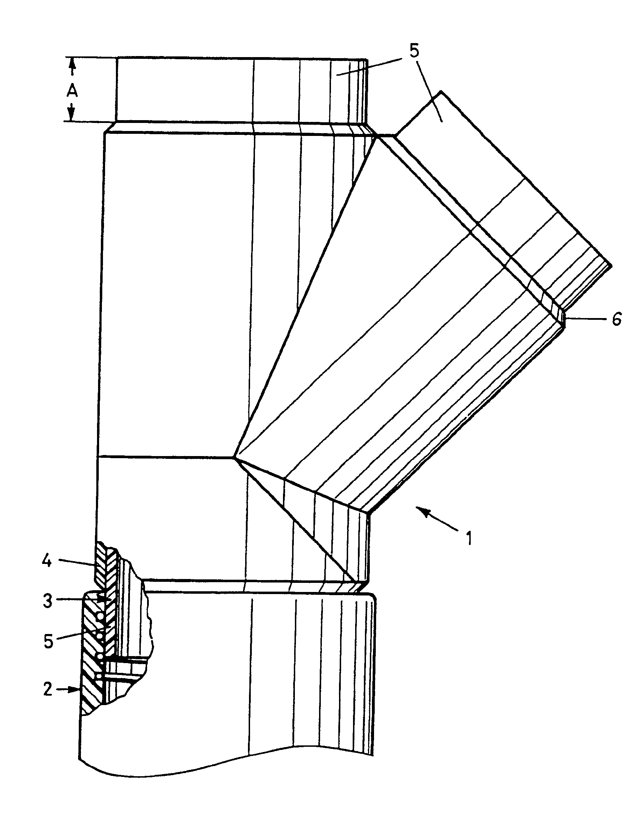

Ein Ausführungsbeispiel der Erfindung wird nachfolgend anhand der einzigen Figur, die teilweise geschnitten eine Seitenansicht eines Abzweigstücks mit aufgeschobener Schweissmuffe zeigt, näher erläutert.

Das gezeigte Formstück ist ein 45°-Abzweigstück 1, an das eine hier schematisch gezeichnete Schweissmuffe 2 angesetzt ist. Das Formstück ist vollständig im Spritzgussverfahren hergestellt und kann auch ein Bogenstück oder ein anderes für Rohrsysteme und insbesondere Abflussrohrsysteme verwendbares Formstück sein.

Das Abzweigstück 1 besitzt einen Körper 3 aus einem thermoplastischen Kunststoff, beispielsweise Polyaethylen, Polypropylen, Polyvinylchlorid oder Polybutadien. Auf diesen Körper 3 ist eine schalldämmende Schicht 4 aufgespritzt, die aus einem thermoplastischen Elastomer mit einem anorganischen Füllstoff besteht und eine Dicke von 5 mm aufweist. Der Füllstoff ist vorzugsweise Schwerspat mit einem Gewichtsanteil von etwa 80%. Je nach Anforderungen können dem Elastomer Mittel zur Erhöhung der Wärme-, UV- und Ozonbeständigkeit beigemischt sein. Das Elastomer ist beispielsweise ein thermoplastisches Butadien/Styrol-Elastomer, wie es ähnlich in der Schuhindustrie verwendet wird.

Der Körper 3 ragt an seinen Enden um die Länge A aus der Schicht 4 hervor. Auf die entsprechenden Bereiche 5 des Körpers 3 wird zum Anschliessen der hier nicht gezeigten weiteren Rohrstücke jeweils eine Schweissmuffe 2 aufgeschoben und in bekannter Weise verschweisst. Die Länge A entspricht der halben Länge einer Schweissmuffe 2. Eine Anschrägung 6 an den Rändern der Schicht 4 dient zum Einspannen des Formstücks in den Spannbacken der Schweissmaschine.

In den Bereichen 5 übernimmt jeweils die Schweissmuffe 2 die Funktion der Schalldämmung. Die Dicke einer Schweissmuffe 2 beträgt üblicherweise etwa 10 mm und ist somit etwa doppelt so dick wie die Schicht 4.

Das Abzweigstück 1 kann für eine Reparatur an beliebiger Stelle durchgetrennt werden. An jeder Trennfläche kann mittels Stumpfschweissung ein Reparaturstück angeschweisst werden. Hierbei werden der Körper 3 und auch die aus einem thermoplastischen Elastomer bestehende Schicht 4 an den Stossflächen verschweisst. Da bei solchen Arbeiten keine Isolationsschichten o.dgl. entfernt werden müssen und auch nach dem Schweissen keine Isolationsmassnahmen erforderlich sind, sind diese besonders einfach und schnell. Selbstverständlich können auch die geraden Rohrstücke eine gleiche oder ähnliche Isolationsschicht aufweisen.

Aus den obigen Angaben ergibt sich somit ein Formstück, das trotz der genannten Vorteile nicht nur den montage- und reparaturtechnischen Erfordernissen in hervorragender Weise Rechnung trägt, sondern auch aufgrund der einfachen und robusten Ausführbarkeit kostenmässig günstig und betrieblich zuverlässig ist.

## Patentansprüche

1. Formstück aus Kunststoff, insbesondere für Rohrsysteme, mit einem Körper (3) aus thermoplastischem Kunststoff und einer auf diesen aufgebrachten, schalldämmenden Schicht (4) aus einem Kunststoff mit einem anorganischen Füllstoff, dadurch gekennzeichnet, dass die schalldämmende Schicht (4) aus einem thermoplastischen Elastomer besteht.

2. Formstück nach Anspruch 1, dadurch gekennzeichnet, dass der Körper (3) an seinen Enden (5) aus der schalldämmenden Schicht (4) hervorragt.

3. Formstück nach Anspruch 1 oder 2, dadurch gekennzeichnet, dass die schalldämmende Schicht (4) im Spritzgussverfahren auf den Körper (3) aufgespritzt ist.

4. Formstück nach einem der Ansprüche 1 bis 3, dadurch gekennzeichnet, dass die Dicke der schalldämmenden Schicht (4) etwa 5 mm beträgt.

5. Formstück nach einem der Ansprüche 2 bis 4, dadurch gekennzeichnet, dass die schalldämmende Schicht (4) an ihren Rändern Anschrägungen (6) aufweist.

## Claims

1. Moulded body of plastics material, particularly for pipe systems, with a body (3) of thermoplastic plastics material and a sound-damping layer (4), placed on this, of a plastics material with an inorganic filler material, characterised thereby that the sound-damping layer (4) consists of a thermoplastic elastomer.

2. Moulded body according to claim 1, characterised thereby that the body (3) protrudes at its ends (5) out of the sound-damping layer (4).

3. Moulded body according to claim 1 or 2, characterised thereby that the sound-damping layer (4) is sprayed onto the body (3) in the injection-moulding process.

4. Moulded body according to one of claims 1 to 3, characterised thereby that the thickness of the sound-damping layer (4) amounts to about 5 millimetres.

5. Moulded body according to claim 2 to 4, characterised thereby that the sound-damping layer (4) has bevels (6) at its edges.

## Revendications

1. Pièce profilée en matière plastique, notamment pour système de canalisations, comportant un corps (3) réalisé en une matière thermoplastique, et une couche insonorisante (4), déposée sur ce corps et réalisée en une matière plastique contenant une charge minérale, caractérisée en ce que la couche insonorisante (4) est constituée par un élastomère thermoplastique.

2. Pièce profilée selon la revendication 1, caractérisée en ce que le corps (3) fait saillie, au niveau de ses extrémités (5), hors de la couche insonorisante (4).

3. Pièce profilée selon la revendication 1 ou 2, caractérisée en ce que la couche insonorisante (4) est déposée sur le corps (3) au moyen du procédé de moulage par injection.

4. Pièce profilée selon l'une des revendications 1 à 3, caractérisé en ce que l'épaisseur de la couche insonorisante (4) est égale à environ 5 mm.

5. Pièce profilée selon l'une des revendications 2 à 4, caractérisée en ce que la couche insonorisante (4) comporte des biseaux (6) au niveau de ses bords.